**Europäisches Patentamt**

**European Patent Office**

**Office européen des brevets**

(11) Veröffentlichungsnummer : **0 097 277 B1**

(12) **EUROPÄISCHE PATENTSCHRIFT**

(45) Veröffentlichungstag der Patentschrift :
28.08.85

(51) Int. Cl.⁴ : **B 29 C 67/22**

(21) Anmeldenummer : **83105560.3**

(22) Anmeldetag : **07.06.83**

(54) Verfahren und Anlage zum kontinuierlichen Herstellen von Blockschaumstoff.

(30) Priorität : **19.06.82 DE 3222959**

(43) Veröffentlichungstag der Anmeldung :
**04.01.84 Patentblatt 84/01**

(45) Bekanntmachung des Hinweises auf die Patenterteilung : **28.08.85 Patentblatt 85/35**

(84) Benannte Vertragsstaaten :
**AT DE FR GB IT NL**

(56) Entgegenhaltungen :
**DE-A- 2 104 585**
**DE-A- 2 142 450**
**DE-A- 2 344 963**
**US-A- 4 005 958**
**US-A- 4 150 075**

(73) Patentinhaber : **MASCHINENFABRIK HENNECKE GMBH**
**Postfach 1180**
**D-5205 St. Augustin 1 (DE)**

(72) Erfinder : **Proksa, Ferdinand, Dr.**
**Am Arenzberg 9**
**D-5090 Leverkusen 3 (DE)**

(74) Vertreter : **Müller, Heinz-Gerd, Dipl.-Ing. et al**
**BAYER AG Konzernverwaltung RP Patentabteilung**
**D-5090 Leverkusen 1, Bayerwerk (DE)**

Jouve, 18, rue St-Denis, 75001 Paris, France

## Beschreibung

Die Erfindung betrifft ein Verfahren und eine Anlage zum kontinuierlichen Herstellen von Blockschaumstoff, wobei ein aus mindestens zwei Schaumstoff bildenden, flüssigen Reaktionskomponenten erzeugtes Reaktionsgemisch unter Bildung einer geschlossenen, seitlich begrenzten Schicht auf eine auf einer wandernden Unterlage geförderte Folie aufgebracht wird und das Reaktionsgemisch anschließend aus dem flüssigen in den cremigen Zustand übergeht und schließlich unter Vergrößerung des Volumens zu Schaumstoff ausreagiert.

Beim kontinuierlichen Herstellen von Blockschaum stellt sich bei störungsfreier Arbeitsweise am Anfang des Aufschäumbereiches ein Gleichgewichtzustand ein, in dem der auf der Folie zugeführte Gemischfilm ohne Relativbewegung parallel zur Folie, den Schaumstoffblock bildend, auftreibt. Dieses Gleichgewicht ist außerordentlich labil, weil einerseits die Gefahr besteht, daß der aufgetragene Gemischfilm im besagten Bereich das bereits im Aufschäumen begriffene Gemisch unterspült und daß sogar das zuvor aufgetragene Gemisch entgegen der Förderrichtung zurückströmen kann. Als Folge dieser Überwälzung von verschieden altem Reaktionsgemisch ergeben sich Störungen bei der Schäumreaktion, die im Querschnitt des ausreagierten Schaumstoffblockes in Form von Abschnitten unterschiedlicher Dichte bzw. Zellgröß in Form von Schlieren oder sogar Rissen ersichtlich sind.

Man kann diesen Überwälzungen nur dadurch begegnen, daß man je nach den sonstigen Parametern eine gewisse Mindestfördergeschwindigkeit einhält.

Aus diesem Grunde werden Kleinanlagen, d. h. solche, die aufgrund des geringen Bedarfs mit kleinem Durchsatz arbeiten sollen, unrentabel, weil bei gewünschter Blockhöhe infolge der erforderlichen Mindestgeschwindigkeit eine relativ lange Aufschäumzone und Verfestigungszone vorgesehen werden müssen, was einen hohen maschinellen Aufwand und großen Platzbedarf bedeutet.

Ähnliche Schwierigkeiten treten bei Großanlagen auf, d. h. bei Anlagen mit hohem Durchsatz, welche insbesondere Blöcke über die übliche Höhe von 1 m bis 1,20 m hinaus produzieren. Hier finden Überwälzungen statt, weil das Reaktionsgemisch nicht in genügend hoher, ruhender Schicht zugeführt werden kann, ohne daß durch starkes Fließen die erwähnten Überwälzungserscheinungen mit ihren Folgen auftreten.

Um dieses Problem zu lösen, hat man bereits vorgeschlagen (DE-OS-2 142 450 entsprechend US-PS-3 786 122), dem eigentlichen Aufschäumbereich einen Trog vorzuschalten, in welchem das Reaktionsgemisch am Boden zugeführt wird, worin es bereits zu reagieren beginnt und schließlich oben über ein Wehr in den eigentlichen Aufschäumbereich abströmt. Durch variierende Höhe des Wehres über seine Breite kann das Überströmen des anreagierten Reaktionsgemisches so gesteuert werden, daß sich ein Schaumstoffblock mit rechteckigem Querschnitt bildet.

Es hat sich jedoch gezeigt, daß die im Reaktionsgemisch enthaltenen Gase oder durch die beginnende Reaktion entstehenden Gase während dieser Zwischenlagerung des Reaktionsgemischs im Trog die Gemischsäule zu ihrer Oberfläche hin nicht mehr durchdringen können, weil das an der Oberfläche befindliche Reaktionsgemisch bereits soweit anreagiert ist, daß es eine zu große Zähigkeit besitzt. Infolgedessen verbleiben in dem anreagierten Gemisch Gasblasen, die nicht mehr entweichen können und schließlich die Homogenität des fertigen Blockes stören.

Nach einem weiteren Vorschlag (US-PS-4 005 958) wird das als Film aufgetragene Gemisch im noch flüssigen Zustand durch mehrere Stauwehre in seinem Fluß gebremst. Jedes Wehr bildet einen Überlauf, vor welchem sich Gemisch anstaut, so daß die einzelnen Gemischpartikel in jedem Stau unterschiedliche Verweilzeit aufweisen. Insbesondere besteht auch die Gefahr des Zurückströmens des Reaktionsgemisches an der Oberfläche, so daß dadurch das Altersspektrum des Gemischs noch stärker vergrößert wird. Auch hierdurch treten die erwähnten Störungen sowie mindere physikalische Eigenschaften des Schaumstoffes auf. Ein Nachteil ist auch darin zu sehen, daß die Bodenfolie über diese Wehre geführt werden muß.

Es besteht also die Aufgabe, mittels eines geeigneten Verfahrens auf einer jeweils entsprechend konzipierten Anlage kontinuierlich Blockschaumstoff bei geringem Durchsatz oder auch bei großen Durchsätzen, insbesondere bei der Erzeugung von Hochblöcken, ein Produkt mit homogener Schaumstoffstruktur, d. h. ein schlieren-, riß- und blasenfreies Produkt, mit optimalen physikalischen Eigenschaften zu erhalten.

Die Lösung der Aufgabe erfolgt durch ein Verfahren, das dadurch gekennzeichnet, ist, daß das Reaktionsgemisch mindestens zum überwiegenden Teil zunächst aufeinanderfolgend portioniert wird und die einzelnen Portionen hintereinander zwangsgefördert werden und erst beim Cremigwerden die aufeinanderfolgenden Portionen miteinander zu einer geschlossenen Schicht vereinigt werden.

Dadurch wird erreicht, daß jede Portion von der Aufgabestelle bis in den Anfangsbereich der Aufschäumzone getrennt gefördert wird, so daß eine Relativbewegung, die zu Überwälzungen oder Unterspülungen führen könnte, je nach Portionierungsgrad stark herabgesetzt oder sogar unterbunden ist. Der Altersunterschied zwischen zwei aufeinanderfolgenden Portionen ist insbesondere dann gering, wenn die einzelnen Portionen relativ klein sind, d. h. wenn viele kleine portionen anstelle weniger großer Portionen bei gleichem Gemischdurchsatz pro Zeiteinheit gefördert werden. Die erforderliche Anzahl der Portionen zur Erzeugung eines homogenen Schaumstoffes hängt im wesentlichen von der Reaktionsgeschwindigkeit des Reaktionsgemisches und der Bandgeschwindigkeit ab. Es versteht sich, daß das Vereinigen der Portionen zu einer geschlossenen Schicht so behutsam vorzunehmen ist, daß zwar ein Zusammenfließen, aber kein Übereinanderfließen stattfindet. Dies läßt sich bei genügend Langsam bewerkstelligtem Übergang von den Portionen zur geschlossenen Schicht mit der später noch erwähnten neuen Anlage durchaus bewerkstelligen. Der besondere Vorteil dieses Verfahrens liegt in dem geringen Altersspektrum. Jede Portion in sich besteht aus nahezu gleich altem Gemisch, und auch das Alter der jeweils benachbarten Portionen ist unerheblich unterschiedlich. Insbesondere weist jede Portion quer zur Förderrichtung im wesentlichen gleiches Alter auf. Bei dieser Verfahrensweise kann jede Portion nur mit dem Gemisch der zuvor zur Schicht ausgebreiteten Portion in Berührung kommen. Das bei der vorbekannten Benutzung von Trögen und Wehren vorhandene breite Altersspektrum der Gemischpartikelchen in einem beliebigen Querschnitt ist beim neuen Verfahren fast völlig unterbunden. Dadurch werden optimale und vor allem reproduzierbare physikalische Eigenschaften des erzeugten Schaumstoffes gewährleistet.

Als Folie wird, wie allgemein bekannt, eine entsprechend der Produktionsgeschwindigkeit laufend zugeführte Papierbahn oder Kunststoffbahn verwendet, die breiter ist als die eingestellte Blockbreite. Die verbleibenden Seitenabschnitte müssen dabei so breit sein, daß sie beim Hochschlagen mindestens die Höhe des aufgeschäumten Blockes aufweisen. Es ist dabei unerheblich, ob anstelle einer einzigen Folie für Boden und Seitenbegrenzungen auch mehrere, insbesondere drei, Folien verwendet werden, die einander abdichtend überlappen, wie dies häufig praktiziert wird. Alternativ hierzu kann die Folie auch dauerhafter Bestandteil der vorhandenen Unterlage sein. Voraussetzung ist hierbei jedoch, daß dann die Folie aus Material besteht oder damit beschichtet ist, an welchem das Reaktionsgemisch bzw. der entstehende Schaumstoff nicht anhaften kann, wie beispielsweise Silikon oder Polytetrafluorethylen. Da aber immer noch erhebliche Schwierigkeiten mit der Reinhaltung solcher Folien bestehen, haben sie in der Praxis bisher keine merkliche Anwendung gefunden.

Nach einer besonderen Ausführungsform wird die Folie zu sich quer zur Förderrichtung erstreckenden Trögen verformt, in welche jeweils eine Portion Reaktionsgemisch eingegeben wird, und die Tröge werden durch Rückverformen sodann wieder eingeebnet.

Theoretisch lassen sich die Portionen auch in speziellen Bechern transportieren und am Anfang der Aufschäumzone, wo das Gemisch cremig zu werden beginnt, auf die Folie aufgießen. Es wäre auch möglich, auf die Folie mitlaufende Schottwände von oben abdichtend aufzusetzen, welche später wieder hochgeführt werden. Da hierbei die Reinigung der entleerten Tröge bzw. der Schottwände ein Problem darstellt, dessen Lösung zwar technisch möglich, aber wirtschaftlich nicht vertretbar ist, stellt demgegenüber die vorbeschriebene Verfahrensvariante eine besonders elegante Lösung dar.

Für die Verformung der Folie zu Trögen bieten sich verschiedene Möglichkeiten :

Nach einer ersten Verfahrensweise wird die Folie durch Faltung der wandernden Unterlage quer zur Förderrichtung verformt.

Nach einer zweiten Durchführungsform wird die Verformung mittels des von den Portionen ausgeübten Gewichtes bewirkt.

Dabei erfolgt die Verformung der Folie durch elastische Dehnung.

Es versteht sich von selbst, daß die vorstehenden Varianten auch untereinander kombinierbar sind.

Da die Tröge an der Gemischaufgabestelle vorhanden sein müssen, während sie am Anfang der Aufschäumzone verschwunden sein bzw. im Verschwinden begriffen sein müssen, ergibt sich zwangsläufig, daß bei nichtelastischer Folie die Bildung der Tröge in irgendeiner Weise durch Raffung erfolgen muß, während bei dehnbaren Folien eine solche Raffung nur dann und insoweit erforderlich ist, wie die Dehnfähigkeit zur Bildung der Tröge nicht ausreicht. Wird also die Folie zur Bildung der Tröge gerafft oder mindestens teilweise gerafft, so muß die Unterlage beim Einebnen der Tröge entsprechend dem Grad der Raffung wieder gestreckt werden. Soweit die Folie nicht elastisch ist, sind die Seitenbegrenzungen der Tröge durch entsprechendes Hochfalten dieser Folie zu bilden. Erforderlichenfalls lassen sich aber auch speziell geformte besondere Seitenstreifen zusätzlich verwenden, die im wesentlichen der Querschnittskontur der Tröge angepaßt sind und gegebenenfalls mittels Klebverbindung abdichtend an der Folie haften, bis sie am Anfang der Aufschäumzone, wo die Portionen zu einer Schicht vereinigt werden, wieder abgezogen werden. Solche zusätzlichen Seitenstreifen könnten auf ihrer zum Trog weisenden Seite mit einer antiadhäsiven Schicht, wie Silikon oder Polytetrafluorethylen, überzogen sein, um Verluste an Reaktionsgemisch zu vermeiden.

Die Querschnittsform der Tröge kann verschiedenartig sein ; d. h. beispielsweise kann die Aufeinanderfole der Tröge eine Dreieckslinie, eine Trapezlinie oder eine Sinuslinie darstellen. Die Tröge sollten sich im wesentlichen über die Schäumbreite erstrecken und so gestaltet sein, daß sich über die gesamte Schäumbreite möglichst schnell, aber ohne zu starkes Fließen des portionierten Gemisches die gewünschte Schicht bildet. Darüber hinaus kann es zweckmäßig sein, die Tröge über die Schäumbreite gesehen unterschiedlich breit und/oder unterschiedlich tief zu gestalten, um bewußt eine ungleichmäßig starke Schichtbildung oder das Ausbreiten bei der Schichtbildung zu begünstigen.

Die Anlage zur Durchführung des Verfahrens geht aus von einer Förderbahn mit Seitenbegrenzungen, wobei die Förderbahn

a) durch eine Gemischaufgabezone mit Reaktionsgemischaufgabevorrichtung, eine Aufschäumzone und eine Verfestigungszone geführt ist,

b) mindestens im Bereich der Gemischaufgabezone auf einem endlosen Transportband besteht und

c) durch eine sich auch auf die Seitenbegrenzungen erstreckende mitgeführte Folie abgedeckt ist.

Das Neue ist darin zu sehen, daß die Folie in der Gemischaufgabezone trogartige, sich quer zur Förderrichtung erstreckende Vertiefungen aufweist, während sie am Anfang der Aufschäumzone eben ist.

Diese Folie, auch wenn sie kontinuierlich zugeführt und somit laufend erneuert wird, ist als Bestandteil der Anlage zu betrachten. Neben den bereits im Zusammenhang mit dem neuen Verfahren beschriebenen Gestaltungsmöglichkeiten der Folie ließe sich auch eine Folie aus tiefziehfähigem und wärmeschrumpffähigem Kunststoff verwenden, in welche vor oder beim Auflegen auf das Transportband entsprechende Tröge durch Tiefziehen eingeformt werden, die im Aufschäumbereich durch Wärmeschrumpfung wieder einzuebnen sind.

Vorzugsweise sind jedoch für die Vertiefungen der Folie entsprechende Vertiefungen der Förderbahn des Transportbandes vorhanden, während die Förderbahn am Anfang der Aufschäumzone wenigstens annähernd eben ist.

Je nach den Eigenschaften der Folie, d. h. ob ausreichend oder teilweise elastisch oder nicht dehnfähig, muß das Transportband entsprechend gestaltet sein.

Nach einer besonderen Ausführungsform bestehen die Vertiefungen der Förderbahn des Transportbandes aus Ausnehmungen, und vor der Aufschäumzone ist unter dem Obertrum eine in Förderrichtung ansteigende Auflauffläche vorgesehen.

Diese Ausführungsform ist besonders gut geeignet für die Verwendung elastischer Folien, aber auch nichtdehnbarern, sofern die Ausnehmungen so gestaltet sind, daß beim Einfüllen der Reaktionsgemischportionen in den Trog sich dieser durch das damit aufgebrachte Gewicht automatisch bildet. Der sackartig durchhängende Trog wird dann von der Auflauffläche wieder hochgedrückt. Eine geringfügige Unebenheit, die der Dicke der Platten des Transportbandes entspricht, verbleibt hier jedoch. Deshalb sollte diese Ausführungsform nur verwendet werden, wenn das Transportband am Beginn der Aufschäumzone endet, so daß unmittelbar daran eine ebene Unterlage vorhanden ist, die für eine gleichmäßige Schichtdicke auf der Folie sorgt. Das heißt, in diesem Falle würde die restlose Einebnung erst hinter dem Auslaufende des Transportbandes stattfinden. Es ist durchaus möglich, die Anlage so auszulegen bzw. die Fördergeschwindigkeit so einzustellen, daß ein für die Gemischverteilung günstiger Zeitpunkt erst in den Bereich der völlig ebenen Unterlage fällt, so daß die einwandfreie Bildung einer gleichmäßig starken Schicht gewährleistet ist, sofern man nicht an bestimmten Stellen durch entsprechende Maßnahmen eine höhere Schichtstärke wünscht.

Um eine besonders günstige Verteilung des Gemisches zu erzielen, läßt sich die Auflauffläche, die auch aus einzelnen Schienen bestehen kann, sowohl in Förderrichtung als auch in Querrichtung dazu, beispielsweise durch unterschiedliche Krümmung, besonders gestalten oder entsprechend einstellen. Besonders vorteilhaft Einfluß nehmen läßt sich auf die Gemischverteilung, wenn die Auflauffläche aus mehreren, einzeln verstellbaren Elementen besteht.

In den Ausnehmungen können teleskopartig geführte Rahmen, welche einen Boden umgeben, angeordnet sein. Diese Ausgestaltung gestattet die Verwendung solcher Folien, die ansonsten unter dem Gewicht der Reaktionsgemischportion reißen könnten. Sie haben außerdem den Vorteil, daß bei entsprechender Gestaltung des Teleskoprahmens bzw. der Anordnung des Bodens dieser Boden im Endstadium mit dem Transportband eine geschlossene Ebene bildet.

Es lassen sich auch um Schwenkachsen bewegbare Böden in den Ausnehmungen vorsehen. Die Schwenkachsen sind vorzugsweise an der Vorder- und/oder Hinterkante der Ausnehmungen angeordnet, so daß der Boden jeweils durch eine oder zwei Klappen gebildet ist, deren freie Kanten auf der bis auf die vor die Gemischaufgabestelle verlängerte Auflauffläche gleiten. Es versteht sich, daß über die Schäumbreite gesehen mehrere einzelne Klappen vorhanden sein können, um bei entsprechender Gestaltung der Auflauffläche eine gezielt unterschiedliche Bewegung der Klappen zu ermöglichen.

Nach einer besonderen Ausführungsform sind der Förderbahn des Transportbandes vor der Gemischaufgabezone eine Raffvorrichtung und vor der Auschäumzone eine Streckvorrichtung zugeordnet. Diese Vorrichtungen sind jedenfalls dann unerläßlich, wenn nichtdehnfähige oder nicht genügend dehnfähige Folien Verwendung finden. In diesem Falle muß nämlich mindestens das Obertrum des Transportbandes, also die Förderfläche, vor der Gemischaufgabestelle entsprechend gerafft werden, um vor der Aufschäumzone wieder entsprechend gestreckt zu werden. Zum Raffen und Strecken bieten sich die verschiedensten Ausführungsformen an.

Vorzugsweise bestehen die Vertiefungen des Transportbandes aus Auffaltungen der Förderfläche.

Derartige Auffaltungen haben beispielsweise die Form einer Zick-Zack-Linie oder einer Trapezlinie. Zum Auffalten, d. h. zum Raffen des Transportbandes, ist beispielsweise die einlaufseitige Umlenkwalze mit entsprechenden Greifarmen versehen, die während der Drehung die einzelnen Platten des Bandes, die beweglich miteinander verbunden sind, raffen, indem sie vorgesehene Führungsrollen in entsprechende Führungsschienen einschieben und/oder indem die Auffaltungen mit Greifern in ihrer Position zueinander gesichert werden. Vor bzw. am Anfang der Aufschäumzone, wo das Reaktionsgemisch bereits in den Cremezustand übergeht, werden dann die Führungsschienen so geführt bzw. die Greifer gelöst, daß sich das Transportband wieder zu einer Ebene strekken kann. Die Verwendung solcher Auffaltungen hat den besonderen Vorteil, daß der Folie bei der Trogbildung ein entsprechend vorgeformter Trog vorgegeben wird, der nur ausgekleidet zu werden braucht. Für die Seitenbegrenzung der Tröge lassen sich erforderlichenfalls besondere Stützelemente vorsehen.

Nach einer weiteren bevorzugten Ausführungsform weist die Förderbahn zwischen den Vertiefungen Distanzveränderungsglieder auf.

Diese Ausführungsform ist insbesondere auch dann von Vorteil, wenn nicht-dehnfähige Folien verwendet werden. Vor der Gemischaufgabestelle werden die Distanzveränderungsglieder zur Kürzung des Transportbandes bzw. der Förderfläche verwendet, während sie vor bzw. am Anfang des Aufschäumbereiches wieder eine entsprechende Streckung zulassen. Diese Distanzveränderungsglieder bestehen beispielsweise aus einer ineinandergreifenden Verzahnung zweier benachbarter Platten, wobei die gegenseitige Eingrifftiefe der Zähne entsprechend der erforderlichen Streckung bzw. Raffung veränderbar ist. Die Zahnbreite sollte dabei so gering gehalten sein, daß bei gestrecktem Distanzveränderungsglied die Folie nicht oder nur unwesentlich in die gebildeten Lükken durchhängen kann, um eine gleichmäßige Stärke der Gemischschicht zu gewährleisten.

Um die Trogbildung der Folie zu begünstigen, lassen sich Einformvorrichtungen vorsehen.

Der Hauptbestandteil einer solchen Einformvorrichtung besteht beispielsweise aus einem der gewünschten Trogform angepaßten Stempel, mit welchem die Folie jeweils in die Vertiefungen des Transportbandes eingedrückt wird. Sofern die Vertiefungen des Transportbandes aus Ausnehmungen bestehen, ergibt sich auch die Möglichkeit, die Einformvorrichtung als von der Rückseite des Transportbandes an die Folie anzulegende Saugnäpfe zu gestalten. Die Saugwirkung kann wieder aufgehoben werden, sofern die eingefüllte Portion Reaktionsgemisch genügend Gewicht besitzt, um dadurch den gebildeten Trog beizubehalten, bzw. bis der Trog wieder eingeebnet werden soll.

Insbesondere für Anlagen mit geringem Durchsatz kann es zweckmäßig sein, ein einziges Transportband vorzusehen, auf welchem der Block, gegebenenfalls unter leichter Neigung, bis zur ausreichenden Verfestigung transportiert wird.

Zum Erzeugen von hohen Schaumstoffblöcken, d. h. also bei Anlagen mit großem Durchsatz, dürfte es vorteilhaft sein, für den Bereich der Gemischaufgabe bis zum Anfang des Aufschäumbereiches, d. h. bis zum Cremezustand des Reaktionsgemisches, ein gesondertes Transportband vorzusehen und an dieses eine geneigte Gleitfläche anzuschließen, die sich zumindest über einen Teil der Aufschäumzone erstreckt, und daß sich daran schließlich ein weiteres Transportband anschließt, dessen Länge im wesentlichen der erforderlichen Verfestigungszone entspricht. Es ist möglich und bei der Herstellung von hohen Schaumstoffblöcken sogar zweckmäßig, der Anlage eine an sich bekannte Rechteckblockeinrichtung (US-PS 4 150 075) zuzuordnen.

Die neue Anlage ist in der Zeichnung in mehreren Ausführungsbeispielen rein schematisch dargestellt und nachstehend näher erläutert. Es zeigen :

Figur 1 eine Kleinanlage (Anlage mit geringem Durchsatz) im Längsschnitt,

Figur 2 die Anordnung der in Fig. 1 nur angedeutet dargestellten Führungsschienen in der Seitenansicht,

Figur 3 die Anlage gemäß Fig. 1 in der Draufsicht,

Figur 4 eine Großanlage (Anlage mit großem Durchsatz zur Herstellung von hohen Blöcken) im Längsschnitt,

Figur 5 die Aufgabezone einer dritten Anlage in der Seitenansicht,

Figur 6 die Aufgabezone der Anlage gemäß Fig. 5 in der Draufsicht,

Figur 7 einen Schnitt gemäß Linie D/E in Fig. 5,

Figur 8 den Abriß eines Förderbandes eines in der Aufgabezone einer Anlage angeordneten Transportbandes in der Draufsicht,

Figur 9 ein Distanzveränderungsglied zur Anlage gemäß Fig. 8 in der Seitenansicht,

Figur 10 dieses Distanzveränderungsglied in das Förderband verkürzender Darstellung und

Figur 11 die Anordnung der Führungsschienen zu dieser Anlage in gesonderter Darstellung.

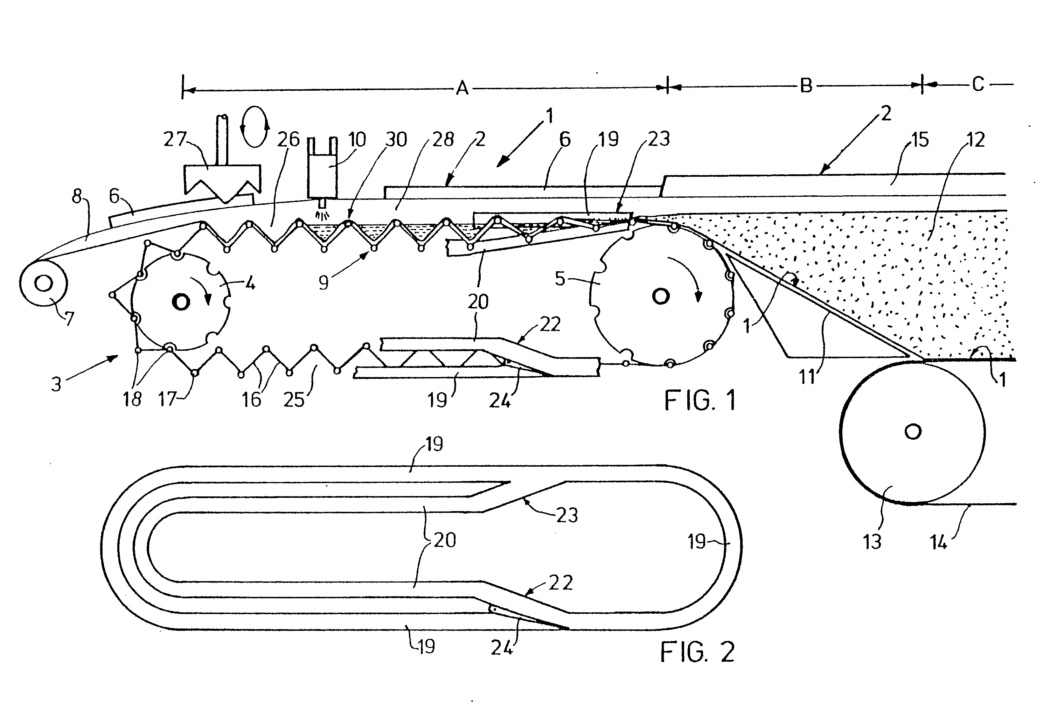

In Fig. 1 bis 3 besteht die Kleinanlage aus einer Förderbahn 1 mit Seitenbegrenzungen 2. Die Förderbahn 1 ist durch eine Gemischaufgabezone A, eine Aufschäumzone B und eine Verfestigungszone C geführt. Es versteht sich, daß die Übergänge von einer Zone A, B in die andere Zone D, C in der Praxis fließend sind, obwohl ihnen konstruktiv bestimmte Anlagenabschnitte zugeordnet sind.

Die Förderbahn 1 besteht in den einzelnen Zonen A, B, C aus verschiedenen Elementen. In der Gemischaufgabezone A ist sie durch ein endloses Transportband 3 gebildet, welches über Umlenkwalzen 4,5 umläuft.

Die Seitenbegrenzungen 2 bestehen hier aus Stützblechen 6. Einlaufseitig ist vor dem Transportband 3 eine Abwickelstation 7 für eine Boden- und Seitenfolie 8 angeordnet ; und über dem Obertrum 9 des Transportbandes 3 ist eine Reaktionsgemischaufgabevorrichtung 10 (Mischkopf) zum Herstellen eines schaumstoffbildenden Reaktionsgemisches aus Polyol und Isocyanat vorgesehen. In der Aufschäumzone B ist die Förderbahn 1 durch eine schiefe Ebene 11 gebildet, deren Neigungswinkel so eingestellt ist, daß unter Berücksichtigung der Fördergeschwindigkeit der Anlage und der Aufschäumgeschwindigkeit des Reaktionsgemisches das Oberflächenniveau des sich bildenden Schaumstoffblockes 12 im wesentlichen horizontal verläuft. In der Aushärtezone C ist wiederum ein über Umlenkwalzen 13 umlaufendes endloses Transportband 14 vorgesehen. Der schiefen Ebene 11 und dem Transportband 14 sind am nicht dargestellten Gestell fixierte Seitenwände 15 als Seitenbegrenzung 2 zugeordnet. Das Transportband 3 besteht aus einzelnen Querplatten 16, welche über Achsen 17 gelenkig miteinander verbunden sind. Die Enden der Achsen 17 sind mit Rollen 18 versehen. Die Rollen 18 laufen in beiderseits des Transportbandes 3 angeordneten Führungsschienen 19, 20, welche durch Verzweigung im Bereich des Untertrums 21 des Transportbandes 3 eine als Weiche gestaltete Raffvorrichtung 22 bilden und im Bereich des Obertrums 9 durch Vereinigung eine Streckvorrichtung 23, welche vor der Aufschäumzone B angeordnet ist ; und zwar dort, wo das Reaktionsgemisch bereits anreagiert und sich im Cremezustand befindet. Die Raffvorrichtung 22 verursacht ein Auffalten der Querplatten 16, indem jeweils die Rollen 18 jeder zweiten Achse 17 mittels der umstellbaren Zungen 24 in die inneren Führungsschienen 20 eingeführt werden, während die Rollen 18 der übrigen Achsen 17 nur in den äußeren Führungsschienen 19 umlaufen. Durh das Auffalten entstehen sich quer zur Förderrichtung erstreckende trogartige Vertiefungen 25. Mittels der Streckvorrichtung 23 werden die Vertiefungen 25 durch Flachlegen der Querplatten 16 wieder eingeebnet. Um die Boden- und Seitenfolie 8 mit trogartigen Vertiefungen 26 zu versehen, ist über dem Obertrum eine als Stempel ausgebildete Einformvorrichtung 27 angeordnet, deren Bewegung der Fördergeschwindigkeit des Transportbandes 3 angepaßt ist. Zum Bilden der Seitenwände 28 der trogartigen Vertiefungen 26 sind als Schlägerräder (nur eines ist dargestellt) ausgebildete Einformvorrichtungen 29 vorgesehen. Die Stützbleche 6 dienen der Stabilisierung bzw. Führung der Seitenwände 28. In jede Vertiefung 26 wird eine gleichgroße Portion Reaktionsgemisch eingegeben. Das Niveau dieser Portionen bleibt unterhalb der zwischen den Vertiefungen 26 gebildeten Scheitel 30. Erst im Bereich der Streckvorrichtung 23 werden die Portionen durch Einebnen der Vertiefungen 25, 26 zu einem gleichmäßig dicken Film ausgebreitet, wobei sich das Reaktionsgemisch jetzt bereits in der Cremephase befindet. Die nun vorhandene Zähflüssigkeit vermeidet beim Zusammenfließen Überwälzungen und damit auch Störungen im fertigen Block 12. In bekannter Weise erfolgt das Aufschäumen in der Zone B und das Aushärten des Blockes 12 in der Zone C.

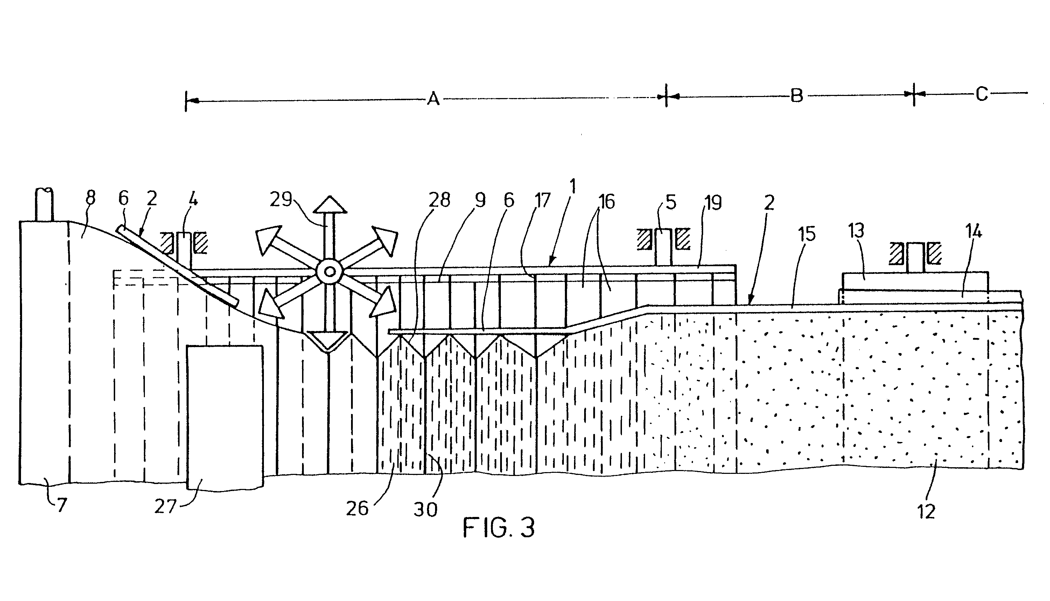

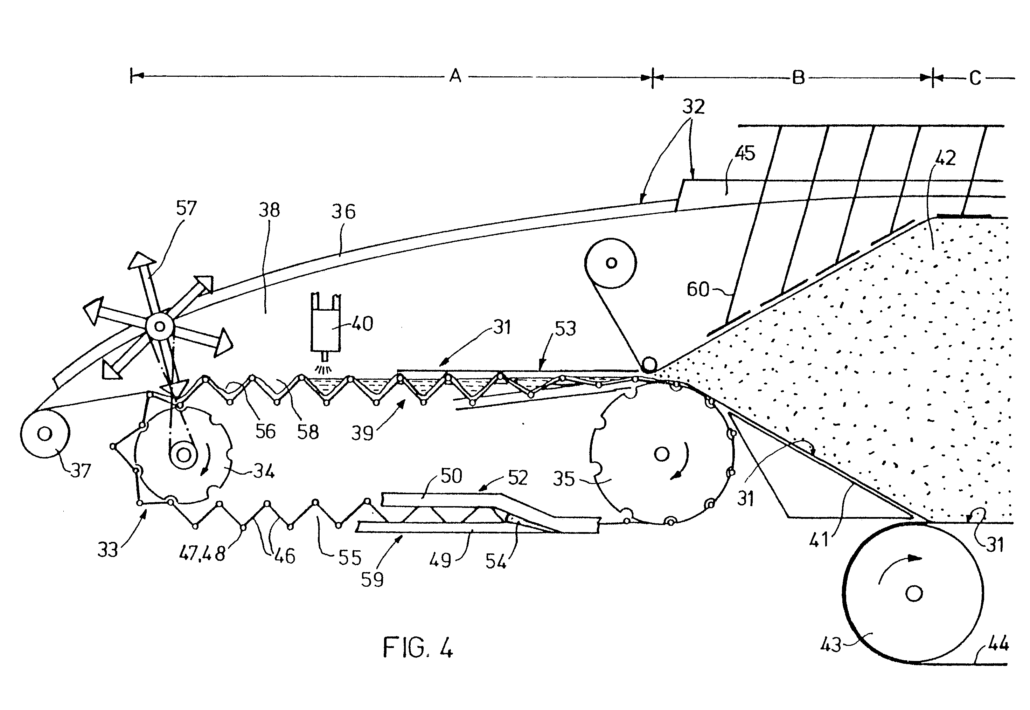

In Fig. 4 besteht die Großanlage zur Herstellung von Hochblöcken aus einer Förderbahn 31 mit Seitenbegrenzungen 32. Die Förderbahn 31 ist durch eine Gemischaufgabezone A, eine Aufschäumzone B und eine Verfestigungszone C geführt. Es versteht sich, daß die Übergänge von einer Zone A, B in die andere Zone B, C in der Praxis fließend sind, obwohl ihnen konstruktiv bestimmte Anlagenabschnitte zugeordnet sind. Die Förderbahn 31 besteht in den einzelnen Zonen A, B, C aus verschiedenen Elementen : In der Gemischaufgabezone A ist sie durch ein endloses Transportband 33 gebildet, welches über Umlenkwalzen 34, 35 umläuft. Die Seitenbegrenzungen 32 bestehen hier aus Stützblechen 36. Einlaufseitig ist vor dem Transportband 33 eine Abwickelstation 37 für eine Boden- und Seitenfolie 38 angeordnet ; und über dem Obertrum 39 des Transportbandes 33 ist eine Reaktionsgemischaufgabevorrichtung 40 (Mischkopf) zum Herstellen eines Schaumstoff bildenden Reaktionsgemisches aus Polyol und Isocyanat vorgesehen. In der Aufschäumzone ist die Förderbahn 31 durch eine schiefe Ebene 41 gebildet, deren Neigungswinkel so eingestellt ist, daß er in etwa spiegelbildlich dem Profil der Oberfläche des sich bildenden Schaumstoffblockes 42 entspricht. In der Aushärtezone C ist wiederum ein über Umlenkwalzen 43 umlaufendes endloses Transportband 44 vorgesehen. Der schiefen Ebene 41 und dem Transportband 44 sind am nicht dargestellten Gestell fixierte Seitenwände 45 als Seitenbegrenzung 2 zugeordnet. Das Transportband 33 besteht aus einzelnen Querplatten 46, welche über Achsen 47 gelenkig miteinander verbunden sind. Die Enden der Achsen 47 sind mit Rollen 48 versehen. Diese Rollen 48 laufen in beiderseits des Transportbandes 33 angeordneten Führungsschienen 49, 50, welche durch Verzweigung im Bereich des Untertrums 51 des Transport bandes 43 eine als Weiche gestaltete Raffvorrichtung 52 bilden und im Bereich des Obertrums 39 durch Vereinigung eine Streckvorrichtung 53, welche vor der Aufschäumzone B angeordnet ist ; und zwar dort, wo das Reaktionsgemisch bereits anreagiert und sich im Cremezustand befindet. Die Raffvorrichtung 52 verursacht ein Auffalten der Querplatten 46, indem jeweils die Rollen 48 jeder zweiten Achse 47 mittels der umstellbaren Weichenzugen 54 in die inneren Führungsschienen 50 eingeführt werden, während die Rollen 48 der übrigen Achsen 47 nur in den äußeren Führungsschienen 49 umlaufen. Durch das Auffalten entstehen sich quer zur Förderrichtung erstreckende trogartige Vertiefungen 55. Mittels der Streckvorrichtung 53 werden die Vertiefungen 55 durch Flachlegen der Querplatten 46 wieder eingeebnet. Um die Boden- und Seitenfolie 38 mit trogartigen vertiefungen 56 zu versehen, ist über dem Obertrum eine als Schlägerrad ausgebildete Einformvorrichtung 57 angeordnet, deren Bewegung der Fördergeschwindigkeit des Transportbandes 33 angepaßt ist. Zum Bilden der Seitenwände 58 der trogartigen Vertiefungen 56 sind als Schlägerräder (nicht dargestellt) ausgebildete Einformvorrichtungen vorgesehen, die denjenigen gemäß Ziffer 29 in Fig. 3 entsprechen. Die Stützbleche 36 dienen der Stabilisierung bzw. Führung der Seitenwände 58. In jede Vertiefung 56 wird eine Portion Reaktionsgemisch eingegeben. Die Vertiefungen 56 sind dabei nicht über die zwischen ihnen liegenden Scheitel 59 hinaus gefüllt. Erst im Bereich der Streckvorrichtung 53 werden die Portionen durch Einebnen der Vertiefungen 52, 56 zu einem in diesem Falle gleichmäßig dicken Film ausgebreitet, wobei sich das Reaktionsgemisch bereits in der Cremephase befindet. Die nun vorhandene Zähflüssigkeit vermeidet beim Zusammenfließen Überwälzungen und damit auch Störungen im fertigen Block 42. In bekannter Weise erfolgt dann das Aufschäumen in der Zone B und das Aushärten des Blockes 42 in der Zone C. In der Aufschäumzone B ist eine sog. Rechteckblockeinrichtung 60 angeordnet, welche auf die Oberfläche des entstehenden Blockes 42 egalisierend einwirkt.

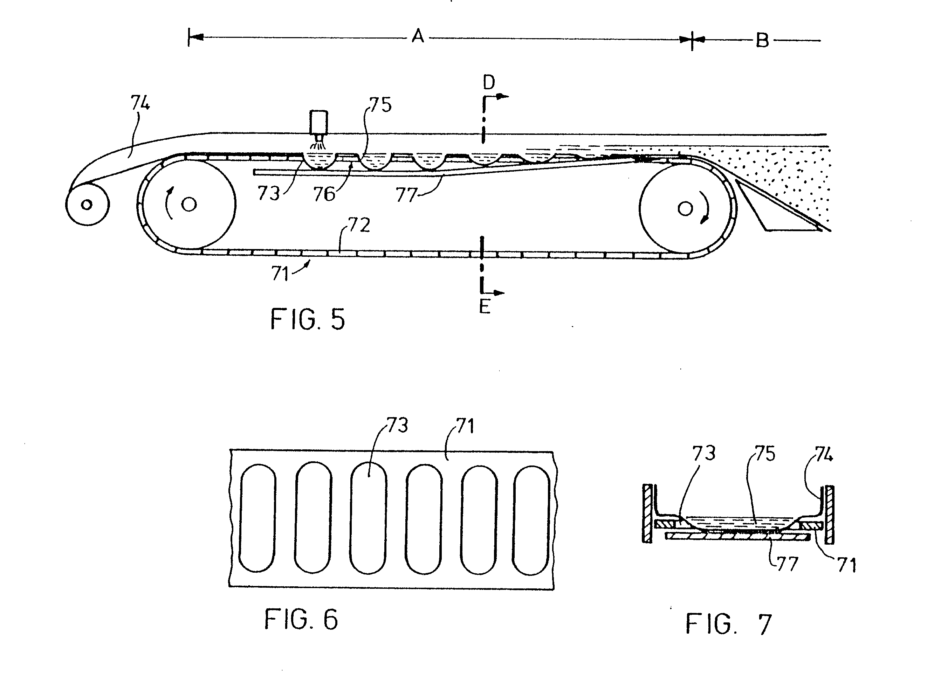

In Fig. 5 bis 7 ist in der Aufgabezone A ein Transportband 71 vorgesehen, dessen endloses Förderband 72 als Ausnehmungen ausgebildete Vertiefungen 73 aufweist. Als Boden- und Seitenfolie 74 wird eine elastische Folie verwendet, welche unter dem Einfluß des Gewichtes der aufgegebenen Portionen in den Ausnehmungen 73 ihrerseits trogartige Vertiefungen 75 bildet. Unterhalb des Obertrums 76 des Transportbandes 71 ist eine in Förderrichtung ansteigende Auflauffläche 77 vorgesehen, auf der sich die trogartigen Vertiefungen 75 abstützen und im ansteigenden Teil wieder eingeebnet werden, wobei sich die Folie 74 aufgrund ihrer Elastizität wieder zusammenzieht, so daß sich in der Cremephase des Reaktionsgemisches, d. h. kurz vor der Aufschäumzone, eine gleichmäßig starke Schicht aus Reaktionsgemisch durch Zusammenfließen der einzelnen Portionen bildet.

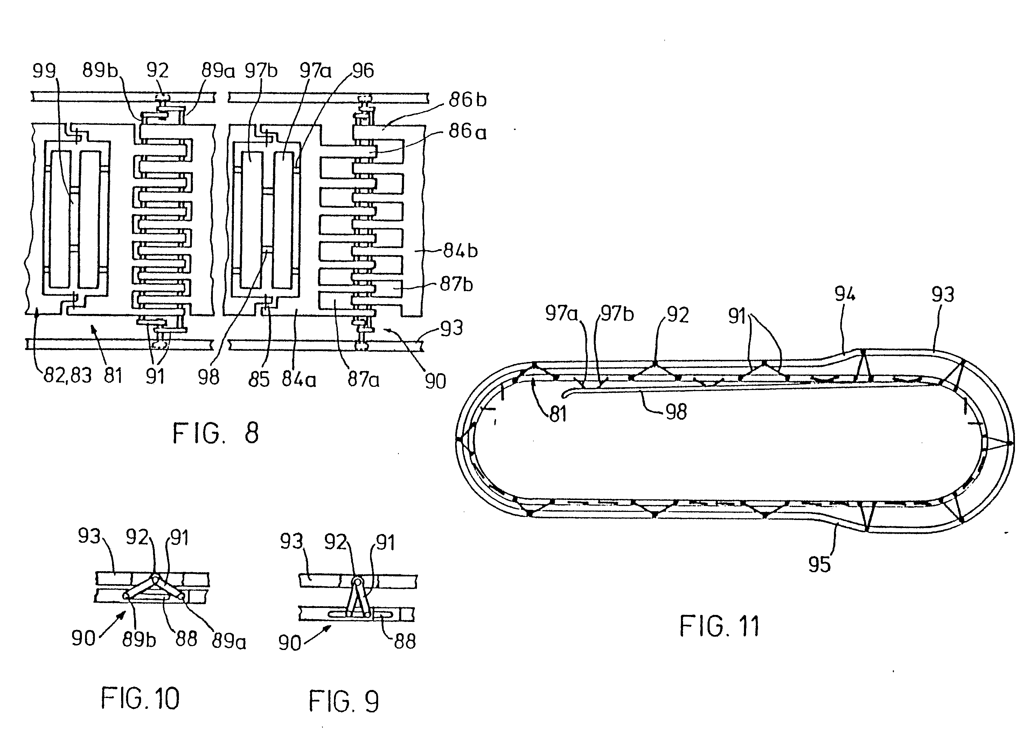

In Fig. 9 bis 11 ist das Obertrum 81 eines Förderbandes 82 eines in der Aufgabezone A angeordneten Transportbandes 83 dargestellt. Es besteht aus Querplatten 84a, 84b von im wesentlichen gleicher Bauart. Benachbarte Platten sind dabei jeweils um 180° gedreht angeordnet. Die Platten 84a, 84b sind über Gelenke 85 miteinander zum Förderband 82 verbunden. Zähne 86a, 86b der Platten 84a, 84b greifen jeweils in dazwischen vorgesehene Lücken 87a, 87b. Die Zähne 86a, 86b weisen Langlöcher 88 auf, durch welche Querstangen 89a, 89b hindurchführen. Diese enden in Distanzveränderungsgliedern 90. Hierzu gehören auch noch Hebel 91 und Rollen 92. Letzere laufen in Führungsschienen 93. Durch entsprechende Wahl ihres Abstandes in bezug auf die Oberfläche des Förderbandes 82 ziehen die Distanzveränderungsglieder 90 das Förderband 82 zusammen oder strecken es in gewünschter Weise für die Portionierung bzw. Schichtbildung des Reaktionsgemisches. Das heißt, sie bilden an den gewünschten Stellen eine Streckvorrichtung 94 und eine Raffvorrichtung 95. In den Ausnehmungen 99 sind an Scharnieren 96 befestigte Klappen 97a, 97b angeordnet, welche auf einer als zwei Schienen ausgebildeten Auflauffläche 98 schleifen. Die Funktionsweise ist derjenigen des Transportbandes gemäß Fig. 5 bis 7 ähnlich.

## Patentansprüche

1. Verfahren zum kontinuierlichen Herstellen von Blockschaumstoff, wobei ein aus mindestens zwei Schaumstoff bildenden, flüssigen Reaktionskomponenten erzeugtes Reaktionsgemisch unter Bildung einer geschlossenen, seitlich begrenzten Schicht auf eine auf einer wandernden Unterlage geförderten Folie aufgebracht wird und das Reaktionsgemisch anschließend aus dem flüssigen in den cremigen Zustand übergeht und schließlich unter Vergrößerung des Volumens zu Schaumstoff ausreagiert, dadurch gekennzeichnet, daß das Reaktionsgemisch mindestens zum überwiegenden Teil zunächst aufeinanderfolgend portioniert aufgegeben wird und die einzelnen Portionen hintereinander zwangsgefördert werden und erst beim Cremigwerden die aufneinanderfolgenden Portionen miteinander zu einer geschlossenen Schicht vereinigt werden.

2. Verfahren nach Anspruch 1, dadurch gekennzeichnet, daß die Folie zu sich quer zur Förderrichtung erstreckenden Trögen verformt wird, in welche jeweils eine Portion Reaktionsgemisch eingegeben wird und daß die Tröge durch Rückverformen wieder eingeebnet werden.

3. Verfahren nach Anspruch 2, dadurch gekennzeichnet, daß die Folie durch Faltung der wandernden Unterlage quer zur Förderrichtung verformt wird.

4. Verfahren nach Anspruch 2, dadurch gekennzeichnet, daß die Verformung mittels des von den Portionen ausgeübten Gewichtes bewirkt wird.

5. Verfahren nach Anspruch 4, dadurch gekennzeichnet, daß die Verformung der Folie durch elastische Dehnung erfolgt.

6. Anlage zur Durchführung des Verfahrens nach den Ansprüchen 1 bis 5, bestehend aus einer Förderbahn (1 ; 9, 31 ; 39, 76, 81) mit Seitenbegrenzungen (2), wobei die Förderbahn (1 ; 9, 31 ; 39, 76, 81)

a) durch eine Gemischaufgabezone (A) mit Reaktionsgemischaufgabevorrichtung (10, 40), eine Aufschäumzone (B) und eine Verfestigungszone (C) geführt ist,

b) mindestens im Bereich der Gemischaufgabezone (A) aus einem endlosen Transportband (3, 33, 71, 83) besteht ; und

c) durch eine sich auch auf die Seitenbegrenzungen (2) erstreckende mitgeführte Folie (8, 38, 74) abgedeckt ist, dadurch gekennzeichnet, daß die Folie (8, 38, 74) in der Gemischaufgabezone (A) trogartige, sich quer zur Förderrichtung erstreckende Vertiefungen (26, 56, 75) aufweist, während sie am Anfang der Aufschäumzone (B) eben ist.

7. Anlage nach Anspruch 6, dadurch gekennzeichnet, daß für die Vertiefungen (26, 56, 75) der Folie (8, 38, 74) entsprechende Vertiefungen (25, 55, 73, 99) der Förderbahn (1 ; 9, 31 ; 39, 76, 81) des Transportbandes (3, 33, 71, 83) vorhanden sind, während die Förderbahn (1 ; 9, 31 ; 39, 76, 81) am Anfang der Aufschäumzone (B) wenigstens annähernd eben ist.

8. Anlage nach Anspruch 7, dadurch gekennzeichnet, daß die Vertiefungen (73, 99) der Förderbahn (76, 81) des Transportbandes (71, 83) aus Ausnehmungen bestehen und vor der Aufschäumzone (B) unter dem Obertrum (76, 81) eine in Förderrichtung ansteigende Auflauffläche (77, 98) vorgesehen ist.

9. Anlage nach Anspruch 7, dadurch gekennzeichnet, daß der Förderbahn (1, 9, 31 ; 39, 81) des Transportbandes (3, 33, 83) vor der Gemischaufgabezone (A) eine Raffvorrichtung (22, 52, 95) und vor der Aufschäumzone (B) eine Streckvorrichtung (23, 53, 94) zugeordnet sind.

10. Anlage nach Anspruch 9, dadurch gekennzeichnet, daß die Vertiefungen (25, 55) des Transportbandes (3, 33) aus Auffaltungen der Förderbahn (9, 39) bestehen.

11. Anlage nach Anspruch 7 oder 8, dadurch gekennzeichnet, daß die Förderbahn (81) zwischen den Vertiefungen (99) Distanzveränderungensglieder (90) aufweist.

**Claims**

1. Method of continuously producing block foam, in which a reaction mixture produced from at least two foam-forming, liquid reaction components is applied to a film conveyed on a moving support with the formation of a closed, laterally restricted layer, and the reaction mixture then changes from the liquid into the creamy state and finally completely reacts, with an increase in volume, to form a foam, characterised in that at least the main portion of the reaction mixture is charged first of all in successive portions and the individual portions are automatically conveyed forwards in succession and it is not until the successive portions become creamy that they are combined with each other to form a closed layer.

2. Method according to Claim 1, characterised in that the film is formed into troughs which extend transversely to the conveying direction, into each of which troughs a portion of reaction mixture is introduced, and the troughs are flattened again by reverse shaping.

3. Method according to Claim 2, characterised in that the film is shaped by folding the moving support transversely to the conveying direction.

4. Method according to Claim 2, characterised in that shaping is caused by the weight exerted by the portions.

5. Method according to Claim 4, characterised in that the film is shaped by elastic stretching.

6. An installation for implementing the method according to Claims 1 to 5, consisting of a transport line (1 ; 9, 31 ; 39, 76, 81) having side boundaries (2), wherein the transport line (1 ; 9, 31 ; 39, 6, 81)

a) is guided through a mixture charging zone (A) having a reaction mixture charging apparatus (10, 40), a foaming zone (B) and a hardening zone (C),

b) consists of an endless conveyor belt (3, 33, 71, 83) at least in the region of the mixture charging zone (A) ; and

c) is covered by an entrained film (8, 38, 74) which also extends over the side boundaries (2), characterised in that the film (8, 38, 74) has, in the mixture charging zone (A), trough-like indentations (26, 56, 75) which extend transversely to the conveying direction, whereas it is flat at the beginning of the foaming zone (B).

7. An installation according to Claim 6, characterised in that for the indentations (26, 56, 75) in the film (8, 38, 74) corresponding indentations (25, 55, 73,99) are provided in the transport line 1 ; 9, 31 ; 39, 76, 81) of the conveyor belt (3, 33, 71, 83), whereas the transport line (1 ; 9, 31 ; 39, 76, 81) is at least approximately flat as the beginning of the foaming zone (B).

8. An installation according to Claim 7, characterised in that the indentations (73, 99) in the transport line (76, 81) of the conveyor belt (71, 83) consist of cut-out sections, and a rising surface (77, 98) which ascends in the conveying direction is provided below the top run (76, 81) upstream of the foaming zone (B).

9. An installation according to Claim 7, characterised in that the transport line (1, 9, 31 ; 39, 81) of the conveyor belt (3, 33, 83) is provided with a gathering device (22, 52, 95) upstream of the mixture charging zone (A) and a stretching device (23, 53, 94) upstream of the foaming zone (B).

10. An installation according to Claim 9, characterised in that the indentations (25, 55) in the conveyor belt (3, 33) consist of folds in the transport line (9, 39).

11. An installation according to Claim 7 or 8, characterised in that the transport line (81) has distance changing members (90) between the indentations (99).

**Revendications**

1. Procédé pour fabriquer en continu une matière alvéolaire en blocs, dans lequel un mélange réactionnel, produit à partir d'au moins deux composants réactifs liquides formant une matière alvéolaire, est déposé, en formant une couche fermée délimitée latéralement, sur une feuille acheminée sur un support mobile, et le mélange réactionnel passe ensuite de l'état liquide à l'état crémeux et réagit finalement pour produire par accroissement de volume une matière alvéolaire, caractérisé par le fait que le mélange réactionnel est délivré tout d'abord au moins en majeure partie par portions successives et des portions individuelles sont acheminées à force les unes derrière les autres, les portions qui se succèdent mutuellement n'étant réunies, pour former une couche fermée, que lors du passage à l'état crémeux.

2. Procédé selon la revendication 1, caractérisé par le fait que la feuille est déformée en des auges s'étendant transversalement par rapport à la direction de l'acheminement et dans lesquelles est à chaque fois délivrée une portion de mélange réactionnel ; et par le fait que les auges sont de nouveau aplanies par déformation inverse.

3. Procédé selon la revendication 2, caractérisé par le fait que la feuille est déformée par pliage du support mobile transversalement à la direction d'acheminement.

4. Procédé selon la revendication 2, caractérisé par le fait que la déformation est provoquée au moyen du poids exercé par les portions.

5. Procédé selon la revendication 4, caractérisé par le fait que la déformation de la feuille a lieu par allongement élastique.

6. Installation pour la mise en œuvre du procédé selon les revendications 1 à 5, consistant en une piste de convoyage (1 ; 9, 31 ; 39, 76, 81) munie de délimitations latérales (2), la piste de convoyage (1 ; 9, 31 ; 39, 76, 81)

a) passant par une zone (A) de délivrance du mélange dotée d'un dispositif (10, 40) de délivrance du mélange réactionnel, par une zone de moussage (B) et par une zone de solidification (C),

b) consistant en une bande convoyeuse sans fin (3, 33, 71, 83) au moins dans la région de la zone (A) de la délivrance du mélange ; et

c) étant recouverte par une feuille (8, 38, 74) entraînée qui s'étend aussi sur les délimitations latérales (2),

caractérisée par le fait que la feuille (8, 38, 74) présente, dans la zone (A) de délivrance du mélange, des renfoncements (26, 56, 75) en forme d'auge s'étendant transversalement à la direction de l'acheminement, tandis qu'elle est plane au début de la zone de moussage (B).

7. Installation selon la revendication 6, caractérisée par le fait que des renfoncements correspondants (25, 55, 73, 99) de la piste de convoyage (1 ; 9, 31 ; 39, 76, 81) de la bande convoyeuse (3, 33, 71, 83) sont présents pour les renfoncements (26, 56, 75) de la feuille (8, 38, 74), tandis que la piste de convoyage (1 ; 9, 31 ; 39, 76, 81) est au moins approximativement plane au début de la zone de moussage (B).

8. Installation selon la revendication 7, caractérisée par le fait que les renfoncements (73, 99) de la piste de convoyage (76, 81) de la bande (71, 83) consistent en des évidements et qu'il est prévu, avant la zone de moussage (B) et au-dessous du brin supérieur (71, 81), une surface inclinée (77, 98) ascendante dans la direction de l'acheminement.

9. Installation selon la revendication 7, caractérisée par le fait qu'un dispositif de contraction (22, 52, 95) et un dispositif d'extension (23, 53, 94) sont respectivement associés, avant la zone (A) de délivrance du mélange et avant la zone de moussage (B), à la piste de convoyage (1, 9, 31 ; 39, 81) de la bande convoyeuse (3, 33, 83).

10. Installation selon la revendication 9, caractérisée par le fait que les renfoncements (25, 55) de la bande convoyeuse (3, 33) consistent en des pliures de la piste de convoyage (9, 39).

11. Installation selon la revendication 7 ou 8, caractérisée par le fait que la piste de convoyage (81) présente, entre les renfoncements (99), des organes (90) de modification de l'espacement.

FIG. 1

FIG. 2

0 097 277

FIG. 3

0 097 277

FIG. 4

0 097 277

FIG. 5

FIG. 6

FIG. 7

FIG. 11

FIG. 8

FIG. 9

FIG. 10